# EUROPEAN PATENT APPLICATION

(11) **EP 4 814 814 A1**
(43) Date of publication of application: **30.09.2026**
(21) Application number: 26168498.9
(22) Date of filing: 27.03.2026
(51) Int. Cl.: G06N 20/00, H04W 8/24

(54) **METHOD AND APPARATUS FOR TRIGGERING FINE-TUNING OF AI/ML WIRELESS MODELS**

(30) Priority: 28.03.2025 US 202563779552 P; 12.03.2026 US 202619564718
(71) Applicant: Samsung Electronics Co., Ltd., Suwon-si, Gyeonggi-do 16677 (KR)
(72) Inventor: AWADIN, Mohamed, San Jose, CA 95134 (US); ALI, Ramy, San Jose, CA 95134 (US); BAE, Jung Hyun, San Jose, CA 95134 (US)
(74) Representative: Kuhnen & Wacker Patent- und Rechtsanwaltsbüro PartG mbB

(57) **Abstract**

A system and a method are disclosed for fine-tuning an artificial intelligence/machine learning, Al/ML, model online in a wireless communication system. A user equipment, UE, (502) transmits to a base station (504) capability information of fine-tuning online one or more Al/ML models of the UE (502); receives, from the base station (504), channels and/or signals for the UE (502) to determine whether a first Al/ML model of the one or more Al/ML models of the UE (502) needs to be fine-tuned; determines to fine-tune the first Al/ML model online based on the channels and/or signals received from the base station (504) and model-generated output from the first Al/ML model; and fine-tunes the first Al/ML model to generate an output that is used for a downlink transmission.

## Description

### TECHNICAL FIELD

The disclosure generally relates to the field of wireless communication systems. More particularly, the subject matter disclosed herein relates to fine-tuning artificial intelligence/machine learning (Al/ML) models used in wireless communication systems.

### SUMMARY

Recent advances in Al/ML have brought new opportunities to wireless communications to improve performance. Al/ML offers the ability to learn the complexities of wireless communication systems and to adapt the system to changing conditions in real time. This ability may lead to improved performance, increased efficiency and reduced costs. In particular, Al/ML models may improve the performance of various operations including, without limitation, BM, channel state information (CSI) feedback, and position accuracy in wireless communications.

The Third-Generation Partnership Project (3GPP) develops technical standards and specifications that define new generations of radio-access technology, such as without limitation, 5G Advanced (5.5G) and 6G standards. The 5.5G standard applies Al/ML capabilities to an initial set of use cases for the air interface that includes BM, CSI feedback enhancement, and positioning accuracy. The Al/ML models are expected to improve the performance of the operations in these use cases.

The Al/ML models are typically trained offline on a large training data resulting in a large number of internal parameters. The Al/ML model uses statistical and probabilistic techniques on the large training data to learn the patterns and structure of the training data in order to draw inferences that are used to generate an output.

However, the performance of an Al/ML model may at times degrade. An Al/ML model is useful when the Al/ML model makes accurate predictions. The accuracy of the Al/ML model is based on the training dataset used to train the model. The training dataset should closely reflect the types of data that may be used in the real-world process and have a similar distribution to the data that is used in the real-world process. However, at times, the training dataset may differ from the real-world process which may adversely affect the accuracy of the predictions made by the Al/ML model.

In some approaches, when the performance of the Al/ML model appeared to have degraded, corrective actions would be taken to fallback to a non-Al/ML based operation, deactivate the Al/ML functionality or switch to another Al/ML model. To overcome the Al/ML model degradation issue, systems and methods are described herein that determine when to fine-tune an Al/ML model online.

In an embodiment, a method is disclosed that is performed by a user equipment (UE) in a wireless communication system. The method comprises: transmitting, to a base station, capability information comprising Al/ML online fine-tuning of one or more Al/ML models of the UE; receiving, from the base station, channels and/or signals for the UE to determine whether a first Al/ML model of the one or more Al/ML models of the UE needs to be fine-tuned; determining to fine-tune the first Al/ML model online based on the channels and/or signals received from the base station and model-generated output from the first Al/ML model; and fine-tuning the first Al/ML model online to generate an output that is used for a downlink transmission.

In an embodiment, a UE in a wireless communication system is disclosed. The UE comprises: a transceiver; at least one processor; and a memory. The memory comprises instructions that when executed by the at least one processor perform actions that: transmit, to a base station, capability information comprising Al/ML online fine-tuning of one or more Al/ML models of the UE; receive, from the base station, acceptance or rejection of the online fine-tuning of a first Al/ML model of the UE; and upon receipt, from the base station, of acceptance of the online fine-tuning of the first Al/ML model: receive, from the base station, channels and/or signals for the UE to determine whether the first Al/ML model needs to be fine-tuned; determine to fine-tune the first Al/ML model online based on the channels and/or signals received from the base station and model-generated output from the first Al/ML model; and fine-tune the first Al/ML model online to generate an output that is used for a downlink transmission.

### BRIEF DESCRIPTION OF THE DRAWING

In the following section, the aspects of the subject matter disclosed herein will be described with reference to exemplary embodiments illustrated in the figures, in which:
FIG. 1 is a block diagram of a wireless communication system, according to an embodiment.
FIGS. 2A-2D are block diagrams showing the input features and model output for some use cases, according to an embodiment.
FIG. 3 is a block diagram showing an online fine-tuning system of a wireless communication system, according to an embodiment.
FIG. 4 is a table showing examples of use cases employing an Al/ML model, the Al/ML model output and the basis for triggering fine-tunning used in each use case, according to an embodiment.
FIG. 5 is a flow chart of a first method for the online fine-tuning of an Al/ML model, according to an embodiment.
FIG. 6 is a schematic diagram showing the timeline of the online fine-tuning of an Al/ML model, according to an embodiment.
FIG. 7 is a schematic diagram showing the timeline of the indications of commencing and completing the online fine-tuning of an Al/ML model.
FIG. 8 is a flow chart of a second method for the online fine-tuning of an Al/ML model, according to an embodiment.
FIG. 9 is a block diagram of an electronic device in a network environment, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

### ABBREVIATIONS

- ACK: Acknowledgement
- AI: Artificial Intelligence
- BLER: Block Error Rate
- BM: Beam Management
- BS: Base Station
- CFRA: Contention-Free Random Access
- CQI: Channel Quality Indicator
- CSI: Channel State Information

### ABBREVIATIONS

- DL: Down Link
- gNB: Next Generation Node B
- IoT: Internet of Things
- IP: Internet Protocol
- L1-RSRP: Level 1 Reference Signal Received Power
- LTE: Long Term Evolution
- MAC-CE: Medium Access Control - Control Element
- MCS: Modulation and Coding Scheme
- ML: Machine Learning
- MMIB: Mean Mutual Information per Bit
- NACK: Negative Acknowledgement
- NMSE: Normalized Mean Square Error
- NR: New Radio
- NW: Network
- PDSCH: Physical Data Shared Channel
- PMI: Precoding Matrix Indicator
- PRACH: Physical Random Access Channel
- PUCCH: Physical Uplink Control Channel
- PUSCH: Physical Uplink Shared Channel
- RI: Rank Indicator
- RRC: Radio Resource Control
- RS: Reference Signal
- RSRP: Reference Signal Received Power
- SRS: Sounding Reference Signal
- SSB: Synchronization Signal Block
- TRS: Tracking Reference Signal
- UE: User Equipment
- UL: Uplink

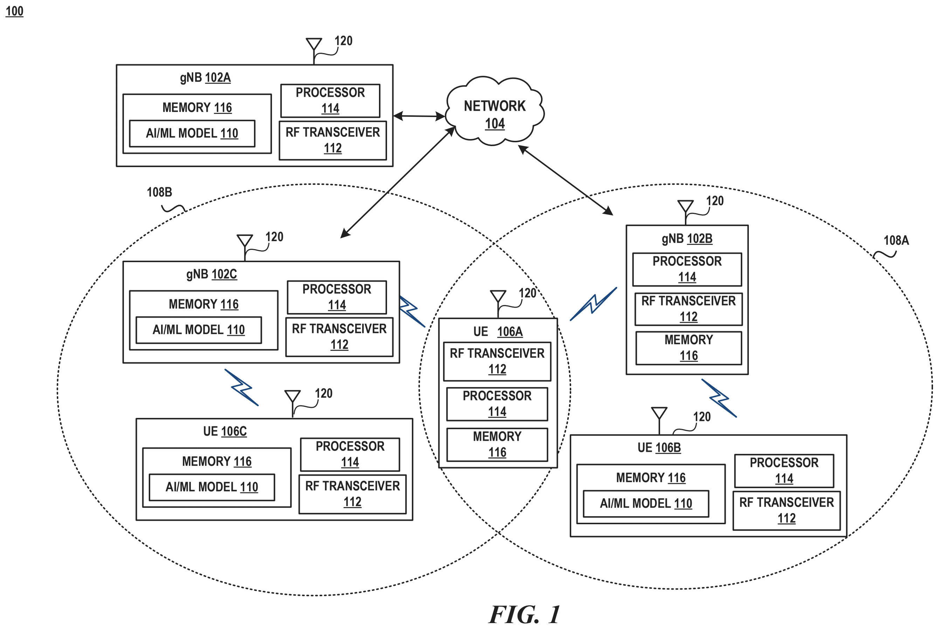

FIG. 1 illustrates an example of a wireless communication system in an embodiment. In particular, FIG. 1 illustrates a wireless communication system using Al/ML capabilities in an embodiment.

The wireless communication system 100 may include several gNB ("Next Generation Node B") or base stations ("BS") 102A-102C ("102") in communication with a network 104, such as the Internet, a proprietary Internet Protocol network or other data network. The base station or gNB 102 provides wireless access to the network 104 for several user equipment (UE) 106A-106C ("106") within a coverage area of the gNB 108A-108B ("108"). Herein, the term "base station" may refer to any radio infrastructure that connects a wireless device to a core network and the internet. The term "base station" and gNB are used interchangeably.

A UE 106 may be any electronic device that is used directly by an end-user to communicate through a wireless network, such as without limitation, cellphone, mobile device, wireless printer, wireless laptop, Internet of Things (IoT) devices, routers, medical devices, smart watches, and the like.

As shown in FIG. 1, UE 106A and 106B, are within coverage area 108A of gNB 102B which provides wireless access to the network 104 for these UEs. UE 106A and 106C are within coverage area 108B of gNB 102C and provides wireless access to the network for these UEs. The gNB 102A communicates with gNB 102B and gNB 102C.

The wireless communication system 100 may use standardized protocols that govern the manner in which the wireless communications are performed, such as, without limitation, 6G, 5G, 5G New Radio (5G NR), long term evolution (LTE), long term evolution advanced (LTE-A), WiMAX, WiFi or other wireless communication standards.

A UE 106 and a gNB 102 may include a processor 114, a memory 116, an antenna 120, a radio frequency (RF) transceiver 112, transmit processing circuitry, and receive processing circuitry. In an embodiment, one or more of the UEs 106 and/or gNBs 102 may include circuitry and/or software to support Al/ML models 110 to perform certain functions of an air interface.

In an embodiment, the memory 116 may include an Al/ML model 110 that may be used for the following functions of the air interface: BM; rank indicator (RI) and channel quality indicator (CQI) selection; channel prediction or precoding matrix indicator (PMI) selection; and/or block error rate (BLER) prediction. However, it should be noted that the techniques described herein are not limited to these functions and may be applied to other functions within a wireless communication system.

An AI/ML model 110 is a mathematical representation of a real-world process. The Al/ML model 110 is usually trained using a mathematical function on historical usage data of a target process. An Al/ML model 110 is typically categorized by its training methodology, its functional capability and its architecture. The Al/ML model 110 includes instructions stored in the memory 116 that when executed by the processor 114 cause computations based on stored weight matrices to output predictions.

The training methodologies may include, without limitation, supervised learning, semi-supervised learning, unsupervised learning, and reinforcement learning. In supervised learning, a mathematical function (e.g., linear regression, logistic regression, random forest, decision tree, K-nearest neighbors, etc.) learns from patterns in the data that generate an outcome in order to associate relationships between the historical usage data and an outcome. In unsupervised learning, a mathematical function (e.g., K-means cluster analysis, etc.) learns from patterns in the data without an output label or classification. Semi-supervised learning uses historical usage data that has a small amount of labeled data and a large amount of unlabeled data. Reinforcement learning uses past experiences through trial and error to find the best solution of a target problem.

The functional capability includes, without limitation, generative or discriminative. A generative AI/ML model generates new data from a given input. A discriminative Al/ML model analyzes the given input to make predictions or decisions.

There are various architectures for an Al/ML model. Traditional machine learning includes classification models, data mining, Bayesian networks, Markov models, clustering, support vector machines, and visual data mapping. Deep learning differs from traditional machine learning since it uses multiple stages of data processing through many hidden layers of a neural network to learn and interpret the features and the relationships between the features. Deep learning embodies neural networks which differs from the traditional machine learning techniques that do not use neural networks. A transformer is another type of architecture that includes a neural network and an attention mechanism that captures different relationships between the elements of the input features.

Although the techniques described herein are explained using online learning or fine-tuning techniques with neural network-based models, the techniques are not limited to this particular type of Al/ML model and other types of Al/ML models may be used.

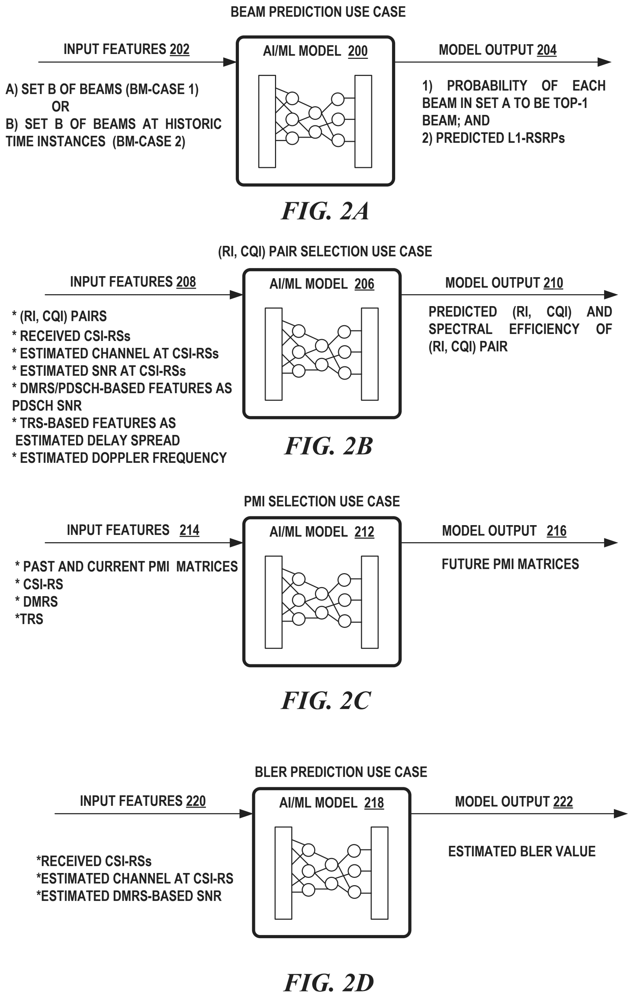

FIGS. 2A - 2D are schematic diagrams of the use of Al/ML models for certain functions of a wireless communication system, according to an embodiment. In particular, the outputs of the Al/ML models are then used for a downlink transmission. FIG. 2A illustrates the input features 202 and model outputs 204 of an Al/ML model 200 used for beam prediction, in an embodiment. FIG. 2B illustrates the input features 208 and model output 210 of an Al/ML model 206 used for RI and CQI selection, in an embodiment. FIG. 2C illustrates the input features 214 and model outputs 216 of an Al/ML model 212 used for PMI selection, in an embodiment. FIG. 2D illustrates the input features 220 and model outputs 222 of an Al/ML model 218 used for BLER prediction, in an embodiment.

Turning to FIG. 2A, there is shown an Al/ML model 200 used for beam prediction according to an embodiment. The Al/ML model 200 outputs a best beam for downlink transmission. A beam is a focused radio signal directed at a specific user or device, or a set of users or a set of devices using beamforming instead of broadcasting the signal in all directions. Beam prediction may pertain to determining the top-1 beam for a particular transmitter and receiver pair. A top-1 prediction has the highest model-generated probability for being the correct beam for a given set of input features. The Al/ML model 200 is used to reduce overhead and latency and to improve the prediction accuracy. In an embodiment, the Al/ML model 200 may be used for spatial-domain downlink beam prediction and temporal-domain downlink beam prediction.

Spatial-domain downlink beam prediction selects a pair of transmitter and receiver beams, or only a downlink beam with the strongest reference signal received power (RSRP) for a particular spatial location without performing beam sweeping. Also, the prediction may be based on a limited beam sweeping and may be conducted when the base station sweeps a limited number of beams, instead of the full set of beams. Beam sweeping is an exhaustive search that involves transmitting signals in different directions for the UE to measure and report the best beam. The Al/ML model 200 may be used to predict a best beam index using spatial information, or limited beam sweep. The beam index is a numerical identifier for a particular beam used by a gNB to communicate with a UE. Temporal-domain downlink beam prediction uses an Al/ML model 200 to output a best pair of transmitter and receiver beams for downlink transmission at a future time.

In an embodiment, the Al/ML model 200 generates model outputs 204 consisting of a predicted probability of each beam in set A as the top-1 beam and/or a predicted L1-RSRP (Layer 1 RSRP) based on given input features 202 for downlink transmission. L1-RSRP in 5G measures the power of specific, beam-level signals (e.g., an SSB or a CSI-RS). In a first case, BM-Case 1, the input features 202 are measurements based on a set B of beams and are used to predict the top-1 beam for downlink transmission. The BM-Case 1 represents the use of an Al/ML model for spatial-domain downlink beam prediction. In the second case, BM-Case 2, the input features 202 are measurements from historic time instance(s) that are used for the top-1 beam prediction in set A. The BM-Case 2 represents the use of an Al/ML model to output the best beam for temporal-domain downlink transmission.

Turning to FIG. 2B, there is shown an Al/ML model 206 for selection of a (RI, CQI) pair used for downlink transmission, in an embodiment. CSI feedback is a technique where the UE measures the downlink channel quality and properties and reports this information back to the gNB. The CSI includes an RI and a CQI that details radio conditions between the UE and the gNodeB. The RI indicates the number of independent data streams that can be transmitted simultaneously between the UE and the gNB based on the current channel conditions. The CQI measures the downlink signal quality which is then used to select the optimal modulation and coding scheme (MCS).

The Al/ML model 206 may estimate the spectral efficiency of all candidate (RI, CQI) pairs and then output the best (RI, CQI) pair having the maximum estimated spectral efficiency 210, or directly outputs the best (RI, CQI) pair used for downlink transmission without estimating the spectral efficiency. Spectral efficiency is the maximum data capacity over a given bandwidth and may be computed from the net data rate (bits per second) divided by the channel bandwidth (hertz). The input features 208 to the Al/ML model 206 may consist of (RI, CQI) pairs, the received CSI-RSs, the estimated channel at these CSI-RSs, or the estimated SNR at these CSI-RSs, DeModulation Reference Signal (DMRS)/PDSCH-based features as the PDSCH SNR and Tracking Reference Signal (TRS)-based features as the estimated delay spread and the estimated Doppler frequency.

Turning to FIG. 2C, there is shown an Al/ML model 212 used to output a PMI or channel which is used to select the best precoding matrix for downlink transmission, according to an embodiment. PMI selection is a technique that selects a best precoding matrix for downlink transmissions. A UE measures the channel using channel state information reference signals (CSI-RS) and selects a best precoding matrix from a codebook having a predefined set of precoding matrices. A precoding matrix is a tool used in multi-antenna (MIMO) wireless systems to weigh data streams before transmission in order to optimize signal quality and minimize interference in the transmission. The selected precoding matrix is then reported back to the gNB as the PMI and the gNB uses the precoding matrix to enable beamforming for specific channel conditions.

The generation of precoding matrices is difficult to generate due to the use of more antennas (massive MIMO), higher frequencies (mmWave), and dynamic environments. Prior methods required precise CSI feedback from a UE to generate a precoding matrix. Al/ML methods offer a more efficient means for generating these matrices. An Al/ML model 212 may be used to generate a future precoding matrix 216 from past and current precoding matrices 214, CSI-RS, DMRS, and TRS.

Turning to FIG. 2D, there is shown an Al/ML model 218 which outputs a BLER value 222 which is then used to determine transmission errors in a downlink transmission. The BLER value 222 is an estimate of the ratio of corrupted data blocks to the total transmitted data blocks. The UE sends an acknowledgment (ACK) for the blocks successfully decoded and sends a negative acknowledgement (NACK) for blocks that fail a cyclic redundancy check (CRC). A CRC is an error-detection mechanism that appends a checksum to data blocks. When the CRC checksum fails, the receiver knows that the data is corrupted. Then, the BLER becomes the ratio of the number of NACKs or blocks failing the CRC over the total number of blocks transmitted (ACKs + NACKs). An Al/ML model 218 may be used to predict a BLER value 222 for a given set of inputs 220. The input for Al/ML model 218 may be the received CSI-RSs, the estimated channel at these CSI-RSs, the estimated SNR at these CSI-RSs, the estimated CSI-RS capacity, MMIB, DMRS-based SNR and TRS-based features as estimated delay spread and estimated Doppler frequency.

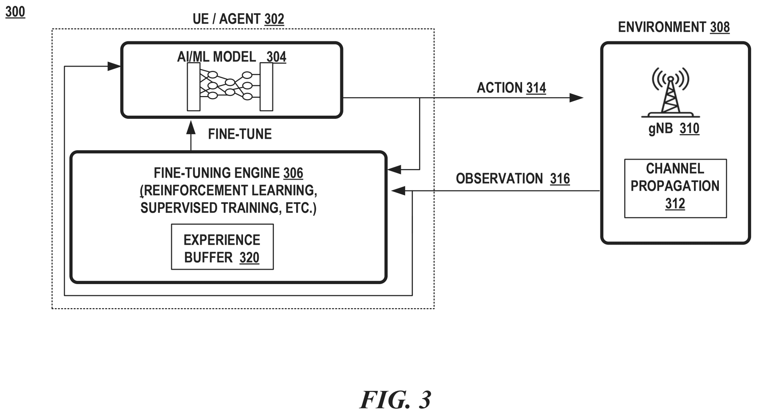

FIG. 3 is a schematic diagram illustrating the components of a wireless communication system having a capability to fine-tune an Al/ML model online. In particular, FIG. 3 illustrates a fine-tuning engine having a capability to fine-tune an Al/ML model online through reinforcement learning, supervised learning, or any other Al/ML learning technique where the rewards in the RL case or the errors in the supervised learning case are generated by the UE, according to an embodiment. In the supervised learning case, the UE computes the error between the predicted metric and the actual metric or ground-truth data. This prediction error is then used to determine whether fine-tuning is needed or not.

Reinforcement learning is a machine learning technique where an agent interacts with an environment to determine the ideal behavior in a specific context in order maximize a cumulative reward. The agent learns to take an action given the state of the environment and a reward that it aims to maximize over time.

In reinforcement learning, an optimal policy is one that maximizes the cumulative reward compared to all other possible policies ensuring the agent makes the best decisions to achieve its goals. A policy is a mapping of state s to action a. An optimal policy indicates the best action a to be taken while in state s that achieves the maximum cumulative reward over time. The maximum cumulative reward is the highest possible total reward an agent can achieve over a sequence of actions. Reinforcement learning aims to learn policies that maximize this cumulative reward.

Fine-tuning an Al/ML model through online supervised fine-tuning refers to using the data samples with high prediction errors to update a set of the parameters used by the Al/ML model to perform certain function, such as beam prediction, PMI selection, etc. Fine-tuning online differs from an offline batch update.

Referring to FIG. 3, there is shown a wireless communication system 300 having a UE 302 coupled to an environment 308. The UE or agent 302 may have an Al/ML model 304 and a fine-tuning engine 306. The UE 302 interacts with an environment 308 using the Al/ML model 304 to predict actions 314 to be performed in the environment 308. The environment 308 may include a gNB 310 and the radio signals from its transmitter (i.e., channel propagation) 312.

The fine-tuning engine 306 may include an experience buffer 320 that may store the rewards, observations, predicted metrics and/or actions. In an embodiment, the fine-tuning engine may generate the rewards given the observation or current state of the environment 308 and the action 314. In an embodiment, the fine-tuning engine may compute the error between the predicted metric (e.g., predicted SE, predicted BLER, predicted best beam, etc.) and the actual metric (ground-truth) (e.g., actual SE, actual BLER) computed through ACKs/NACKs, actual best beam, etc.).

The AI/ML model 304 acts as an agent, receives a current state of the environment or observation 316 and predicts an action 314 for the environment to take based on the current state 318. Depending on Al/ML functionality, the action 314 may be the predicted best DL beam, best PMI, BLER, etc. The feedback from the action being taken in the environment is represented as the reward calculated based on observation 316 or the prediction error between the predicted metric and the ground-truth data/observation. The observation may be CSI-RSs, PDSCH, etc., based on which the UE 302 can calculate the reward. The reward is a numerical value generated from the environment taking an action and indicates how well or bad the recent action was. A positive reward reinforces desirable actions and the Al/ML model 304 learns from the negative rewards to deter from an undesirable action. The rewards indicate the need for the Al/ML model to be fine-tuned. Low reward scores indicate inaccurate responses and that the Al/ML model requires specialized training to improve accuracy.

The AI/ML model 304 is initially configured with an initial set of parameters. At certain points in time, the fine-tuning engine 306 may determine that the Al/ML model needs to be fine-tuned or is informed that the Al/ML model needs to be fine-tuned. The fine-tuning may suspend the use of the function (e.g., BM) using the Al/ML model during the fine-tuning.

The fine-tuning engine 306 may fine-tune the Al/ML by using a machine learning optimization algorithm that generates a better set of parameters of the Al/ML based on the rewards or the data samples with high prediction errors.

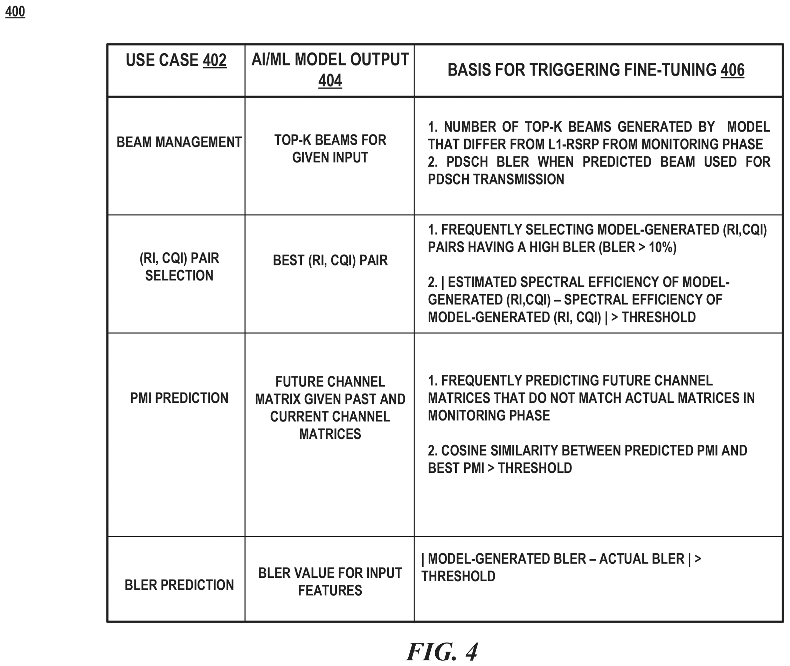

FIG. 4 is a table 400 that shows several examples of use cases 402, an associated Al/ML model output 404, and the basis for triggering the fine-tuning for each use case 406, according to an embodiment.

For the BM use case, the Al/ML model output may be the top-k beams for a given input. The basis for triggering the fine-tuning may be the number of top-k beams generated by the Al/ML model having a L1-RSRP that differs from its RSRP from the monitoring phase in an embodiment. The basis for triggering the fine-tuning may also be whether the predicted beam within the *m*^{th} largest L1-RSRP value of the top-k predicted beams is within a threshold of the largest measured L1-RSRP in an embodiment. The gNB may need to configure periodic RSs to measure them, obtaining the ground truth and compare them with the predicted beam by the Al/ML.

Additionally, the basis for triggering the fine-tuning may be based on the physical downlink shared channel (PDSCH) BLER when the predicted beam is used for PDSCH transmissions in an embodiment. The PDSCH is the primary channel for transmitting a payload from a gNB to a UE. The basis for triggering the fine-tuning may be based on whether the model-generated PDSCH BLER has a high BLER (i.e., BLER > 10%). For example, the difference between the model-generated PDSCH BLER and the ground-truth BLER. The ground-truth BLER is computed as the ratio between the number of NACKs and total number of ACKs and NACKs within a CSI-RS period. The UE may collect the calculated BLER and store them in the experience buffer.

For the (RI, CQI) pair selection use case, the Al/ML model output may be the best (RI, CQI) pair based on an estimated spectral efficiency. The basis for triggering the fine-tuning may be whether the model-selected (RI, CQI) pair has a high BLER (i.e., BLER > 10%) in an embodiment. Additionally, the basis for triggering the fine-tuning may be based on whether the absolute value of the difference between the spectral efficiency of the model-selected (RI, CQI) pair and the spectral efficiency of the empirical (RI, CQI) pair is greater than a threshold in an embodiment. For example, the difference may be between the model-generated PDSCH spectral efficiency and the ground-truth spectral efficiency computed based on ACKs/NACKs. Alternatively, the basis for triggering the fine-tuning may be based on the selected (RI, CQI) resulting in a low spectral efficiency. The spectral efficiency may be calculated through ACK/NACK.

For the PMI prediction use case, the Al/ML model output may be a future channel matrix given current and past matrices. The basis for fine-tuning may be the frequency of predicting future channel matrices that do not match actual matrices from the monitoring phase. This can be determined based on the cosine similarity between the model-predicted PMI and the best PMI being greater than a threshold in an embodiment. Alternatively, the basis for fine-tuning may be the difference between the normalized mean square error (NMSE) of the predicted channel matrix from the actual channel matrix in an embodiment.

For the BLER prediction use case, the Al/ML model output may be the BLER values for an input. The basis for fine-tuning may be whether the absolute difference between the model-predicted BLER and the actual BLER exceeds a threshold in an embodiment. The actual BLER is estimated through ACK/NACK

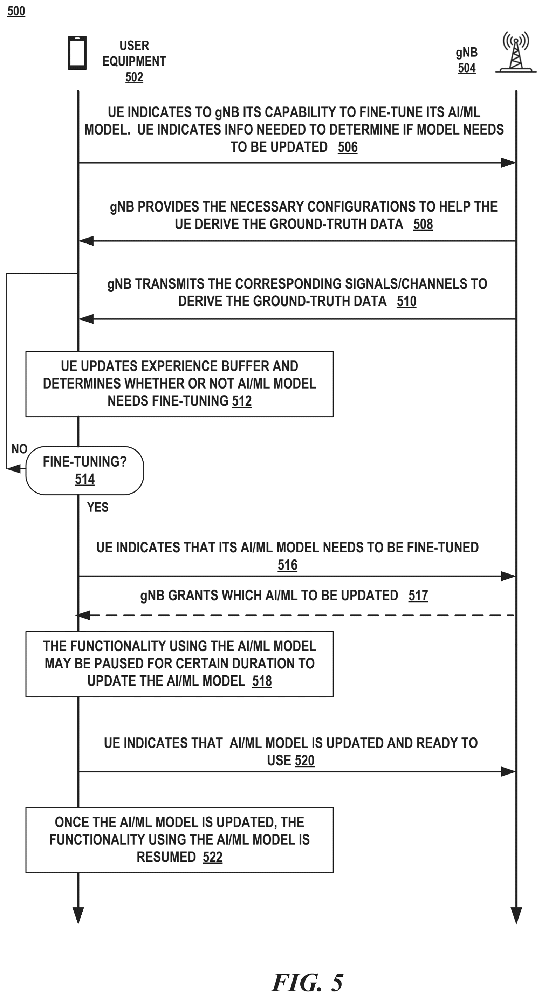

FIG. 5 illustrates the process flow between a UE and a gNB for the online fine-tuning of an Al/ML 500. In particular, FIG. 5 illustrates the process flow in the embodiment where the UE 502 performs the online fine-tuning. The process flow shown in FIG. 5 may be utilized for each of the use cases shown in FIG. 4.

Initially, the UE 502 informs the gNB 504 of its ability to fine-tune an Al/ML model online (step 506). In an embodiment, the UE 502 uses capability signaling to inform the gNB 504 of this capability. Capability signaling may use radio resource control (RRC) messages to communicate a UE's capability. For example, a gNB 504 may transmit a UE Capability Enquiry message to the UE 502 and the UE 502 responds with a UE Capability Information message indicating supported features, such as the ability to fine-tune an Al/ML model online (step 506).

The UE Capability Information message may also include the information needed for the UE to determine if the UE needs to fine-tune the Al/ML model. This may be beneficial to enable the gNB to configure the corresponding channels/RSs properly to help the UE derive the reward or prediction error. Specifically, the gNB may configure the channels/RSs based on the outputs of the Al/ML model. For example, in the BM use case, the Al/ML model predicts the top-k beams for a given input. The fine-tuning may be based on whether the m best measured beams, using RSRP, are among the top-k predicted beams, or based on the beam with largest measured value of L1-RSRP of best k predicted beams is within a margin X dB of largest measured value of L1-RSRP of the resource set(s) for monitoring, etc. Since the measured RSRP is used to calculate the reward/predicted error in this case, then the gNB may then configure multiple CS-RSs for the UE to obtain the measured RSRP.

For the (RI, CQI) pair selection use case, the fine-tuning may be based on the BLER or spectral efficiency. The gNB 504 may schedule the physical downlink shared channel (PDSCH) to transmit data to the UE so the BLER or spectral efficiency of the (RI, CQI) is determined.

For the channel prediction or PMI prediction use case, the fine-tuning may be based on the normalized mean square error (NMSE) between the Al/ML model-predicted channel matrix and the actual channel matrix, or based on the error between the machine learning model predicted PMI and the true best PMI. The gNB 504 may configure some CSI-RSs for the UE to obtain the actual channel matrix.

Additionally, the UE Capability Information message may indicate how long it takes to update the Al/ML model (e.g., # of msec, # of slots, # of subframes), the maximum number of Al/ML models that can be fine-tuned simultaneously, and/or indicate whether or not the updated Al/ML model may be used during the fine-tuning.

Additionally, the UE may generate the ground-truth data over an extended period of time and store such observations in the experience buffer that may be used to update the Al/ML model. It may be beneficial for the gNB to know the size of this buffer such that it can configure channels/RSs properly. This may be used to enable the UE to have different experiences of the environment within its experience buffer. For example, the gNB may properly configure the periodicity of the channels/RSs used to evaluate the ground-truth data such that all the observations within the experience buffer are not correlated, especially when the experience buffer is small.

In response to the notification from the UE 502 that the UE 502 can fine-tune its Al/ML model, the gNB 504 may provide the UE 502 with the necessary configurations for the UE to calculate the ground-truth data (step 508). A configuration refers to a set of parameters and settings that initiate signals or channels that result in the Al/ML model generating an action that triggers the fine-tuning.

For example, in the BM use case, when the fine-tuning is based on whether the top-1 beam with the largest measured value of L1-RSRP of a response set for monitoring is one of the top-k predicted beams, then the gNB 504 may configure periodic RSs for the UE to measure the different beams and to compare them with the predicted beams.

Next, the gNB 504 transmits the channels and/or signals that the UE 502 can use to generate the ground-truth data and stores the ground-truth data (step 510). For example, in the BM use case, if periodic RSs are used to determine the true best beam, for each period, the UE 502 may use the Al/ML model to generate the predicted beam and calculate the ground-truth data from the true beam. The ground-truth data is stored in the fine-tuning engine. For example, if the top-K predicted beams are not among top M beam(s) with largest M measured value(s) of L1-RSRP(s) of the resource set(s) for monitoring, this data is stored in the fine-tuning engine. Note that the UE also may estimate the ground-truth data by itself without the help of the gNB (e.g., through ACK/NACK).

In some situations, a UE 502 may not need the gNB 504 to transmit the channels or signals especially when the performance of the Al/ML model is performing well for an extended period of time. In other cases, the UE 502 may not need the gNB 504 to transmit the channels and/or signal if the plan is not to perform the online fine-tuning when some internal conditions occur, such as when there is limited power or when the UE intends to use the Al/ML model as is.

In these cases, the UE 502 may transmit an indication to the gNB 504 requesting the gNB 504 to stop performing step 510 in order to reduce the signaling overhead and power consumption. To this end, the uplink (UL) signals/channels (e.g., sounding reference signal (SRS), physical random access channel (PRACH), physical uplink control channel (PUCCH), or physical uplink shared channel (PUSCH)), carrying MAC-CE/RRC may be used to request ceasing performing step 510. The request may carry information on the duration that step 510 is paused. For example, predefined values may be provided in the specification and the request may select one of them. Alternatively, another UL signals/channels may be used to request resuming step 510.

If an RS is needed to determine the ground-truth data that relies on the maximum number of active resources or ports, then CSI reporting may be used. If RSs are used in step 510, they are counted towards the maximum number of active resources/ports and may follow a similar procedure as CSI-RS for CSI reporting.

Additionally, the gNB 504 may commence, adjust, or retransmit steps 508 or 510 based on a UE 502 request. This may be beneficial to enable the gNB 504 to adjust how frequently the gNB 504 needs to transmit signals/channels to help the UE 502 derive the ground-truth data. The UE's request may be transmitted before step 508 or step 510. It may include information about which Al/ML model needs to potentially be updated such that the gNB 504 can adjust the transmission of the corresponding signals/channels. The used procedure may be similar to the procedure described for step 516 below where UL channels may be used to carry the indication, such as PUCCH, MAC-CE or RRC.

When to transmit such a request may be up to the UE's implementation. Alternatively, it may be event-based that is triggered by a particular criterion. If legacy Al/ML lifecycle management (LCM) is used to monitor the performance of the Al/ML model, it may also be used to trigger a request transmission. For example, when the performance of the Al/ML model falls below a certain level based on the LCM monitoring and is not necessarily too bad, the UE may request the gNB to transmit additional signals or channels to update the rewards in its experience buffer that may be used to fine-tune the Al/ML model, if needed.

The UE 502 updates the experience buffer and determines whether or not the Al/ML needs to be fine-tuned (step 512). The fine-tuning engine of the UE 502 contains an experience buffer that stores the actions, observations, and ground-truth data that are used to determine when to fine-tune an Al/ML model.

Also, a decision to fine-tune an Al/ML model or not may be based on the number of collected experiences that are very bad/or very good. For example, the basis for triggering the fine-tuning may depend on the ratio of the top-K predicted beams that are among top M beam(s) with largest M measured value(s) of L1-RSRP(s) of the resource set(s) for monitoring. In the case of a very bad experience, none of the top-k predicted beams is among the top M beams with the largest M measure value(s) of L1-RSRP(s) of the resource set(s) for monitoring. In the case of a very good experience, all the top-k predicted beams are among the top M beams with the largest M measured value(s) of L1-RSRP(s) of the resource set(s) for monitoring.

The UE 502 may inform the gNB 504 about the experience buffer status. This may be beneficial when the UE does not necessarily buffer all the experiences.

An existing buffer status report (BSR) may be repurposed to indicate the status of the experience buffer as well. The BSR Medium Access Control - Control Element (MAC-CE) may carry information about the experience buffer size for a different logical channel group. The MAC-CE is a specific type of control signaling within the MAC layer used for rapid, low-latency management of radio resources between the UE 502 and the gNB 504. Therefore, at least one new logical channel identifier (ID) may be introduced for the experience buffer to store the actions, observations, and ground-truth data for the Al/ML model. If there are multiple Al/ML models and each one has its own experience buffer, then separate logical channel IDs may be defined for each Al/ML model. Once this information is available at the gNB 504, the gNB 504 may adjust the intensity/periodicity of Step 510. Alternatively, a dedicated MAC-CE may be used to carry information about the experience buffer size used to collect the ground-truth data for at least one Al/ML model.

The UE may decide to fine-tune its Al/ML model based on the experience buffer status (step 514). The experience buffer status indicates an amount of data in the experience buffer. When there is not enough data to make a decision, the Al/ML model may not be fine-tuned. The collection of the ground-truth data, actions, and observations by the UE 502 may be transparent to the gNB 504. The gNB 504 does not know whether or not the Al/ML model needs to be updated. If the decision is to not fine-tune the Al/ML model, then the Al/ML model can be used in its current condition.

Next, the UE 502 informs the gNB 504 that the Al/ML model will be fine-tuned (step 516). The UE 502 may use channel signaling to inform the gNB 504 of its intent to fine-tune the Al/ML model. While the Al/ML model is being fine-tuned, the Al/ML model may be suspended.

In an embodiment, the gNB 504 may indicate whether to grant the UE 502 permission to fine-tune the Al/ML model as requested by the UE 502 (step 517). The fine-tuning of an Al/ML model consumes a significant amount of usage from one or more CPUs from a legacy CPU pool only, a new Al/ML CPU pool only, both, or through an update_CPU discussed below. The gNB 504 may transmit the grant by the PDCCH using a single bit as the ACK or NACK for the UE request.

Moreover, the UE 502 may request updating multiple deployed Al/ML models as described earlier by using a parameter identifying the Al/ML model. In this case, the grant from the gNB may include the parameter identifying the Al/ML model to be updated and which one to be used as is.

Next, the UE 502 suspends the functionality of the Al/ML model (step 518). There are various ways the functionality associated with the Al/ML model may be suspended until the fine-tuning operation is completed. For example, in the case where the Al/ML model is used for BM, the UE 502 typically transmits reports to the gNB 504 providing information on a predicted beam. During the fine-tuning the UE 502 may suspend transmitting the reports in an embodiment. Alternatively, the UE 502 may not be required to update the reporting quantities in an embodiment. Instead, the UE 502 may keep reporting the old value before the Al/ML model was suspended. Alternatively, the UE 502 may keep reporting using the old parameters of the Al/ML model until the Al/ML model is fine-tuned. This later case may be used when the Al/ML model performance is already satisfactory but further fine-tuning is being made to boost its performance. This feature may be utilized if the UE indicates through capability signaling that it supports using the old Al/ML model while the Al/ML model is being updated.

The UE 502 sends a CSI report to a gNB 504 periodically, aperiodically or semi-persistently based on a network configuration. The report may include CQI, PMI and RI from measurements of the CSI-RS signals. This is done to optimize the gNB's downlink performance to current radio conditions. The suspension of the BM process affects the timing of the UE 502 transmitting the CSI report.

Upon completion of the fine-tuning the UE 502 informs the gNB 504 of the completion of the fine-tuning and that the Al/ML model is operational (step 520). The functionality using the fine-tuned Al/ML is then resumed (step 522). Once the Al/ML model is fine-tuned, the process may return to step 510 to continue monitoring the performance of the fine-tuned Al/ML model. The UE 502 may flush the experience buffer and start buffering new experiences to decide when further fine-tuning is needed. The UE 502 may also decide not to flush its previous buffer and concatenate the new observation to the ones already stored in the experience buffer. This may be beneficial when the Al/ML model fine-tuning is not significant and the previous observations are still relevant to the fine-tuned Al/ML model.

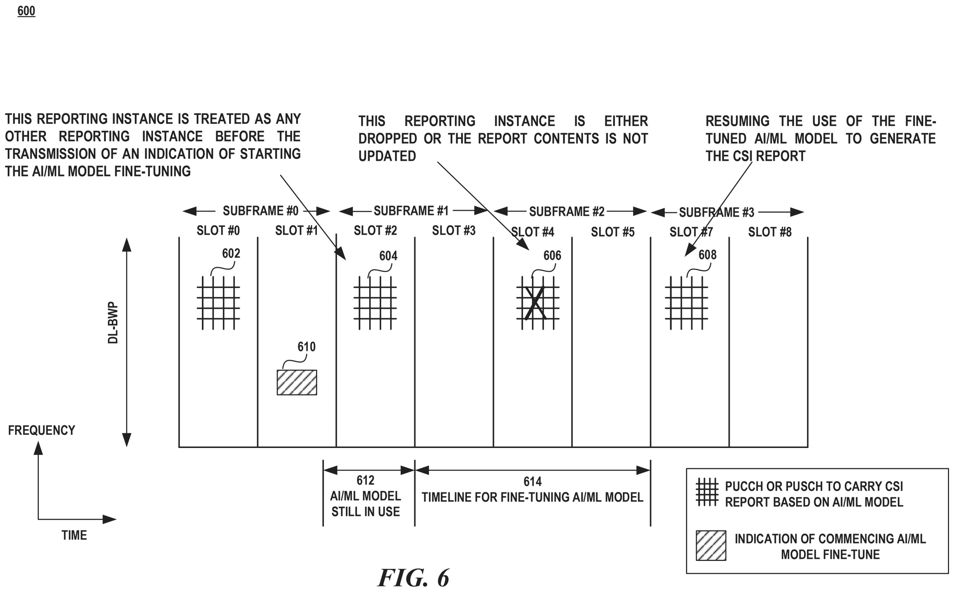

The timing of the suspension of an Al/ML model and the indication of the completion of the fine-tuning is discussed further with respect to FIG. 6. FIG. 6 illustrates an example of the timeline 600 for suspending the operation associated with an Al/ML model being fine-tuned until the completion of the fine-tuning in an embodiment. The example shown in FIG. 6 is for the periodic or semi-persistent CSI reporting on PUSCH or PUCCH to transmit a CSI report having data generated by the Al/ML model. The x-axis of the timeline represents time and the y-axis represents the frequency of the downlink carrier bandwidth part (DL-BWP). The timeline is shown for subframes 0 to subframes 3, where each subframe consists of two slots, slot #0 and slot #1.

Blocks 602, 604, 606 and 608 represent reporting instances to the gNB 504. A reporting instance sends measurement, consumption or performance data to a gNB 504. Block 606 represents the case where the time of a reporting instance is blocked/dropped or where its contents are not updated. Block 610 represents the time period when the gNB 504 receives the indication from the UE 502 of its intent to fine-tune the Al/ML model. After receiving block 610, at the gNB, the gNB may need some time to decode it. This time period 612 may be predefined and indicated from the UE 502 to the gNB 504 through UE Capability Information messaging, or provided from the gNB 504 to the UE 502. Time period 612 represents the time interval when the Al/ML model is still in use and block 604 is still transmitted.

Timeline 614 represents when the Al/ML model is being fine-tuned. This is the reason why block 610 is blocked/dropped or not updated. Once the Al/ML model is fine-tuned, the UE 502 may provide a valid report using the updated Al/ML model after the end of the updating window. The duration of the model update 614 is predefined and indicated from the UE 502 to the gNB 504, through UE Capability Information messaging, or provided from the gNB 504 to the UE 502.

In an embodiment, the UE 502 may provide the indication of commencing Al/ML fine-tuning using L1 signaling or higher layer signaling. PUCCH may be used to provide this indication. This PUCCH may be similar to PUCCH carrying scheduling request (SR). Alternatively, contention-free random access (CFRA) may be used to provide this indication. For either one, the gNB 504 may provide the UE 502 with the necessary configurations to know when, how and where the indication can be transmitted. On the other hand, higher layer signaling may be used as well and MAC-CE or RRC may be used to carry the indication.

A combination of L1 signaling and higher layer signaling may be used as well. For example, a UE 502 may first transmit dedicated SR. When the UE 502 gets an UL grant which the UE 502 may use to carry MAC-CE or RRC carrying the indication.

The information carried by the indication may be as simple as a single bit indicating the Al/ML model is to be fine-tuned and may not be available. Nevertheless, the UE 502 may have multiple Al/ML models for different functionalities that may be fine-tuned. For example, there may be an Al/ML model for BM and another Al/ML model for CSI compression. In this case, the indication should carry more information about which Al/ML is to be updated.

The Al/ML model update indicator may include a parameter (i.e., Al/ML model identifier) identifying the Al/ML model and a single bit indicating whether or not the Al/ML needs to be fine-tuned. The model identified may be the model identifier, if available. Alternatively, an associated ID may be provided which indicates that the NW-side additional conditions are consistent across training and inference. As yet another possibility, the parameter identifying the Al/ML model may refer to the CSI report(s) identifier deploying this model. For each Al/ML model a single bit may indicate whether it needs to be updated or not. This is illustrated in Table 1 below.

**Table 1 - Information carried by the Al/ML model update indicator**

| Parameter identifying the Al/ML model | Whether or not the Al/ML model needs to be updated |
|---|---|
| 1 | 0 or 1 |
| 2 | 0 or 1 |
| 3 | 0 or 1 |

A single Al/ML model may be associated with multiple activities, such as CSI reports. For example, if the associated ID is used to identify the Al/ML model, the same associated ID may be used in multiple CSI reports. In this case, the aforementioned concept of dropping CSI report instances or not update the report may be applied to all CSI reports linked with this associated ID.

In the case of aperiodic CSI reporting, a UE may not expect to be required to provide aperiodic CSI report within the window 614 used for updating the Al/ML model. Similarly, for semi-persistent CSI reporting, the UE may not expect the first CSI reporting instance to be within the window used for updating the Al/ML model. Otherwise, for aperiodic CSI reporting or for the first reporting instance of semi-persistent CSI reporting, the UE may drop the reporting and transmit nothing.

In an embodiment, instead of defining a window for fine-tuning the Al/ML model, the UE may indicate to the gNB when the model is fine-tuned and ready to use. This may be beneficial in the case where the number of parameters that need to be fine-tuned may vary from one fine-tuning instance to another. This may result in the Al/ML model being fine-tuned sooner than expected or later than anticipated. In this case, the functionality associated with Al/ML model should not be paused for a long duration if it is not needed. Moreover, if there are multiple Al/ML models each may have its own update duration. The gNB 504 would have to keep track of the status of the fine-tuning of each Al/ML model which further complicates the implementation of gNB 504.

The aforementioned solutions for the indication of commencing the Al/ML fine-tuning within a time duration may be replaced with an indication of completion of Al/ML online update. Specifically, the end of the duration window needed to complete the Al/ML update may be replaced with the transmission of the indication of the completion of Al/ML model.

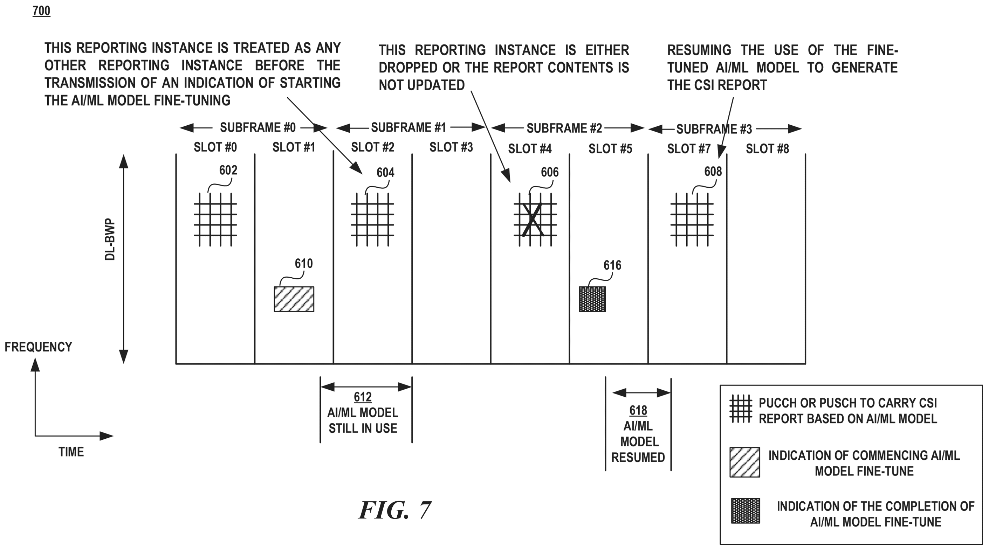

FIG. 7 illustrates an example of the timeline 700 of the indication of commencing the Al/ML fine-tuning and the timeline of the indication of the completion of the Al/ML fine-tuning. The CSI reports starting after certain time period 612 may be either dropped or not updated, until the transmission of the indication that the Al/ML fine-tuning is completed. The duration of time period 612 may be indicated via UE capability signaling, configured by gNB 504, or predefined in the specifications. The UE 502 may resume providing valid CSI reports after time period 618 which may be indicated via UE capability signaling, configured by gNB 504, or predefined in the specifications.

Time periods 612 and 618 are beneficial as they may provide the gNB 504 with enough time to receive an indication, decode it, and act accordingly. The container of the indication of the completion of the Al/ML model fine-tuning may be similar to the containers (PUCCH, PRACH, etc.) proposed for the indication of commencing the Al/ML model fine-tuning.

Additionally, the information carried by the indication of the completion of the Al/ML model update may be similar to the aforementioned information conveyed by the indication of the commencement of the Al/ML model update. For example, the indication of the completion of the Al/ML model update may indicate the update of which Al/ML out of many Al/ML models being concurrently updated is completed and its corresponding functionalities may be resumed.

As mentioned earlier, while the Al/ML is being updated, the corresponding CSI report may not be updated. This may also be reflected by reducing the number of available CPUs, or assume that this number of CPUs is consumed/occupied, and hence, the linked CSI report may not be updated. There are several approaches that count the CSI reports deploying Al/ML models towards a CPU limit. Specifically, the UE may indicate to the gNB, via capability signaling, the maximum supported number of the legacy CPU which determines the maximum number of legacy CSI report(s) that can be simultaneously processed. Additionally, the UE may indicate to the gNB, via capability signaling, the maximum supported number of Al/ML CPU pool which determines the maximum number of AI/ML-based CSI report(s) that can be simultaneously processed. Legacy CSI report may occupy certain number of legacy CPU pool based on its computational complexity. For example, legacy beam management CSI report occupies a single CPU out of the legacy CPU. Some Al/ML-based CSI report may occupy CPU units in both legacy CPU and Al/ML CPU.

The CSI reports linked with Al/ML being fined-tuned may be counted towards a legacy CPU pool only, a new Al/ML CPU pool only, or both. Therefore, when a CSI report is not updated because its corresponding Al/ML model is being updated, a number of CPUs will be consumed/occupied from the CPU pool(s) which would be consumed/occupied if the CSI report is calculated. In this case, the CPU may be occupied for the duration equal to the duration needed to update the Al/ML, regardless of the occupy duration of the CSI when is normally calculated. The start and end may be determined as described earlier.

Alternatively, a new pool of CPUs, e.g., update_CPU, may be introduced for updating the Al/ML models to separate the CPU pool used for CSI report. This may be beneficial as a UE 502 may have multiple Al/ML models that need to be updated concurrently, but the UE 502 may not have the computational power to update all of them simultaneously. The UE 502 may indicate to the gNB 504 the maximum number of Al/ML models that can be updated concurrently. When this limit is exceeded, the Al/ML model may not be available for a longer duration as the UE 502 is fine-tuning the Al/ML models sequentially. The CPU may be occupied for the duration equal to the duration needed to update the Al/ML. The start and end may be determined as described earlier.

Determining which Al/ML to be fine-tuned first may be depend on the identifiers (IDs) of the CSI reports using this Al/ML model. For example, assuming only one Al/ML model can be updated at any time, the Al/ML model linked with the lowest CSI report identifier may be updated first, the Al/ML model that is linked with the second lowest CSI report identifier may be updated second, and so on.

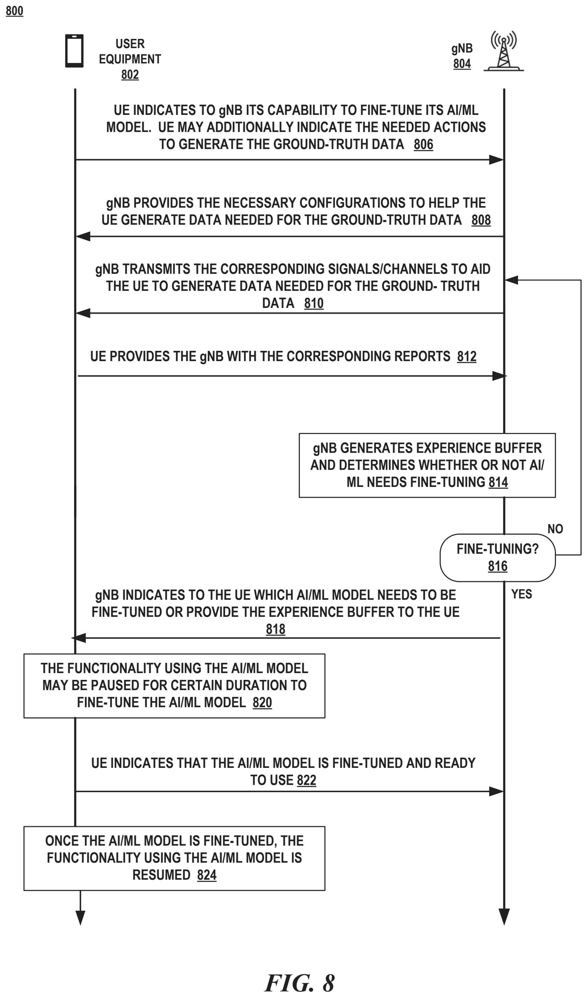

FIG. 8 illustrates a process flow 800 between a UE 802 and a gNB 804 for the online fine-tuning of an AI/ML. In particular, FIG. 8 illustrates the process flow in the embodiment where the gNB 804 determines whether to fine-tune an Al/ML model, in an embodiment.

Initially, the UE 802 informs the gNB 804 of its ability to fine-tune an Al/ML model online (step 806). In an embodiment, the UE 802 may use capability signaling to inform the gNB 804 of this capability in a similar manner as noted above with respect to step 506. Additionally, the UE may indicate the needed actions for the UE to generate the ground-truth data.

In response to the notification from the UE 802 that the UE 802 has the capability to fine-tune its Al/ML model, the gNB 804 may provide the UE 802 with the necessary configurations for the UE 802 to generate the data needed to calculate the ground-truth data (step 808).

Next, the gNB 804 transmits the channels and/or signals that the UE 802 needs to generate the data needed to calculate the ground-truth data (step 810).

The UE 802 provides the gNB 804 with the corresponding reports for the gNB 804 to calculate the ground-truth data (step 812). For example, in the BM use case, if the basis for fine-tuning is the ratio of the top-k predicted beams that are among top M beam(s) with the largest M measured value(s) of L1-RSRP(s) of the resource set(s) for monitoring, then the UE 802 would determine the ratio and report it to the gNB 804. Alternatively, if the basis for fine-tuning is the ratio of the RSRP of the top-k predicted beam(s) and the RSRP of the top-M measured beam(s), then the UE 802 would report these RSRPs to the gNB 804 and the gNB 804 would calculate the ratio. Similarly, if the basis for fine-tuning is a calculated BLER and an Al/ML model-predicted BLER, then the UE 802 would provide the gNB 804 the calculated and Al/ML -predicted BLERs for the gNB 804 to determine the ground-truth data.

In this embodiment, the gNB 804 may have an experience buffer in which the ground-truth data, actions, and/or observations are stored (step 814). The gNB 804 may buffer the ground-truth data and use the ground-truth data to decide whether or not the Al/ML needs to be fine-tuned (step 814). If the gNB 804 decides not to fine-tune the Al/ML model (step 816-no), then the process returns to step 810.

When the gNB 804 decides that the Al/ML model need to be fine-tuned (step 816-yes), then the gNB 804 may transmit an indicator to the UE (step 818). The indicator may be transmitted to the UE 802 through L1 signaling, such as PDCCH, or through a higher layer signaling such as MAC-CE or RRC. The indicator may carry information about which Al/ML model should be fine-tuned (step 818). Additionally, the gNB 804 may transmit the buffered ground-truth data or experiences such that the UE 802 can use this data to fine-tune the Al/ML. The buffered ground-truth data /experiences may be transmitted with the indicator or transmitted separately.

The UE 802 may need a timeline to receive, decode and apply the indication similar to the aforementioned timeline shown above in FIG. 6 (step 820). The UE 802 may pause the functionality that is using the Al/ML model until completion of the fine-tuning. The aforementioned solutions in FIG. 6 and FIG. 7 can be easily extended to the case where the Al/ML model update is triggered by the gNB.

Upon completion of the fine-tuning, the UE 802 indicates to the gNB 804 that Al/ML model is fine-tuned and ready to use (step 822). The functionality using the Al/ML model is then resumed (step 824). The aforementioned solutions in FIG. 6 and FIG. 7 can be easily extended to the case when the Al/ML model update is triggered by the gNB.

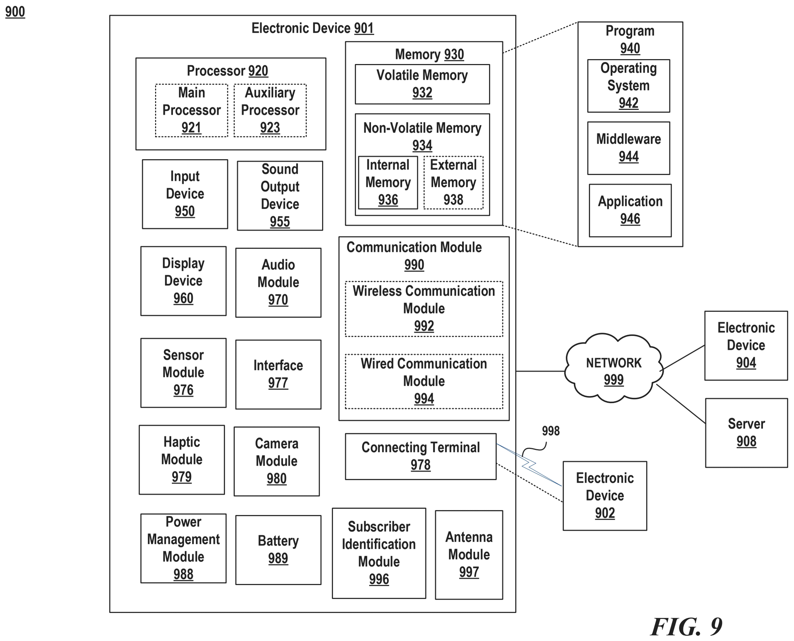

FIG. 9 is a block diagram of an electronic device in a network environment 900, according to an embodiment.

Referring to FIG. 9, an electronic device 901 in a network environment 900 may communicate with an electronic device 902 via a first network 998 (e.g., a short-range wireless communication network), or an electronic device 904 or a server 908 via a second network 999 (e.g., a long-range wireless communication network). The electronic device 901 may communicate with the electronic device 904 via the server 908. The electronic device 901 may include a processor 920, a memory 930, an input device 950, a sound output device 955, a display device 960, an audio module 970, a sensor module 976, an interface 977, a haptic module 979, a camera module 980, a power management module 988, a battery 989, a communication module 990, a subscriber identification module (SIM) card 996, or an antenna module 997. In one embodiment, at least one (e.g., the display device 960 or the camera module 980) of the components may be omitted from the electronic device 901, or one or more other components may be added to the electronic device 901. Some of the components may be implemented as a single integrated circuit (IC). For example, the sensor module 976 (e.g., a fingerprint sensor, an iris sensor, or an illuminance sensor) may be embedded in the display device 960 (e.g., a display).

The processor 920 may execute software (e.g., a program 940) to control at least one other component (e.g., a hardware or a software component) of the electronic device 901 coupled with the processor 920 and may perform various data processing or computations.

As at least part of the data processing or computations, the processor 920 may load a command or data received from another component (e.g., the sensor module 976 or the communication module 990) in volatile memory 932, process the command or the data stored in the volatile memory 932, and store resulting data in non-volatile memory 934. The processor 920 may include a main processor 921 (e.g., a central processing unit (CPU) or an application processor (AP)), and an auxiliary processor 923 (e.g., a graphics processing unit (GPU), an image signal processor (ISP), a sensor hub processor, or a communication processor (CP)) that is operable independently from, or in conjunction with, the main processor 921. Additionally or alternatively, the auxiliary processor 923 may be adapted to consume less power than the main processor 921, or execute a particular function. The auxiliary processor 923 may be implemented as being separate from, or a part of, the main processor 921.

The auxiliary processor 923 may control at least some of the functions or states related to at least one component (e.g., the display device 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). The auxiliary processor 923 (e.g., an image signal processor or a communication processor) may be implemented as part of another component (e.g., the camera module 980 or the communication module 990) functionally related to the auxiliary processor 923.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934. Non-volatile memory 934 may include internal memory 936 and/or external memory 938.

The program 940 may be stored in the memory 930 as software, and may include, for example, an operating system (OS) 942, middleware 944, or an application 946.

The input device 950 may receive a command or data to be used by another component (e.g., the processor 920) of the electronic device 901, from the outside (e.g., a user) of the electronic device 901. The input device 950 may include, for example, a microphone, a mouse, or a keyboard.

The sound output device 955 may output sound signals to the outside of the electronic device 901. The sound output device 955 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 960 may visually provide information to the outside (e.g., a user) of the electronic device 901. The display device 960 may include, for example, a display, a hologram device, or a projector and control circuitry to control a corresponding one of the display, hologram device, and projector. The display device 960 may include touch circuitry adapted to detect a touch, or sensor circuitry (e.g., a pressure sensor) adapted to measure the intensity of force incurred by the touch.

The audio module 970 may convert a sound into an electrical signal and vice versa. The audio module 970 may obtain the sound via the input device 950 or output the sound via the sound output device 955 or a headphone of an external electronic device 902 directly (e.g., wired) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. The sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device 902 directly (e.g., wired) or wirelessly. The interface 977 may include, for example, a high- definition multimedia interface (HDMI), a universal serial bus (USB) interface, a secure digital (SD) card interface, or an audio interface.

A connecting terminal 978 may include a connector via which the electronic device 901 may be physically connected with the external electronic device 902. The connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or an electrical stimulus which may be recognized by a user via tactile sensation or kinesthetic sensation. The haptic module 979 may include, for example, a motor, a piezoelectric element, or an electrical stimulator.

The camera module 980 may capture a still image or moving images. The camera module 980 may include one or more lenses, image sensors, image signal processors, or flashes. The power management module 988 may manage power supplied to the electronic device 901. The power management module 988 may be implemented as at least part of, for example, a power management integrated circuit (PMIC).

The battery 989 may supply power to at least one component of the electronic device 901. The battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the AP) and supports a direct (e.g., wired) communication or a wireless communication. The communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as BLUETOOTH^{™}, wireless-fidelity (Wi-Fi) direct, or a standard of the Infrared Data Association (IrDA)) or the second network 999 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The antenna module 997 may transmit or receive a signal or power to or from the outside (e.g., the external electronic device) of the electronic device 901. The antenna module 997 may include one or more antennas, and, therefrom, at least one antenna appropriate for a communication scheme used in the communication network, such as the first network 998 or the second network 999, may be selected, for example, by the communication module 990 (e.g., the wireless communication module 992). The signal or the power may then be transmitted or received between the communication module 990 and the external electronic device via the selected at least one antenna.

Commands or data may be transmitted or received between the electronic device 901 and the external electronic device 904 via the server 908 coupled with the second network 999. Each of the electronic devices 902 and 904 may be a device of a same type as, or a different type, from the electronic device 901. All or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 901. The electronic device 901 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method performed by a user equipment, UE, (106A, 106B, 106C, 302, 502, 802) in a wireless communication system (100, 300), the method comprising:
transmitting, to a base station (102A, 102B, 102C, 310, 504, 804) capability information comprising artificial intelligence/machine learning, Al/ML, online fine-tuning of one or more Al/ML models of the UE;
receiving , from the base station (102A, 102B, 102C, 310, 504, 804), channels and/or signals for the UE (106A, 106B, 106C, 302, 502, 802) to determine whether a first Al/ML model of the one or more Al/ML models of the UE (106A, 106B, 106C, 302, 502, 802) needs to be fine-tuned;
determining to fine-tune the first Al/ML model online based on the channels and/or signals received from the base station (102A, 102B, 102C, 310, 504, 804) and model-generated output from the first Al/ML model; and
fine-tuning the first AI/ML model online to generate an output that is used for a downlink transmission.

2. The method of claim 1, further comprising:
prior to fine-tuning the first Al/ML model online, transmitting (516) to the base station (504) an indication that the first Al/ML model needs to be fine-tuned.

3. The method of claim 2, further comprising:
receiving (517) from the base station (504) authorization to fine-tune the first Al/ML model online.

4. The method of any one of claims 1 to 3, wherein the capability information comprises a time duration of fine-tuning the one or more Al/ML models and/or an indication of usage of the one or more Al/ML models during fine-tuning.

5. The method of any one of claims 1 to 4, further comprising:
prior to fine-tuning the first Al/ML model online, disengaging usage of the first Al/ML model during the fine-tuning of the first Al/ML model online.

6. The method of claim 5, further comprising:
upon disengaging usage of the first Al/ML model, engaging usage of a prior version of the first Al/ML model while fine-tuning the first Al/ML model online.

7. The method of claim 5, further comprising:
upon disengaging usage of the first Al/ML model, suspending or dropping transmission of channel state information report to the base station (504).

8. The method of any one of claims 1 to 7, further comprising:
resuming operation of the first Al/ML model after a time period from notification to the base station (102A, 102B, 102C, 310, 504, 804) of completion of the fine-tuning of the first Al/ML model online.

9. The method of any one of claims 1 to 7, further comprising:
resuming operation of the first Al/ML model upon a fixed time duration after completion of the fine-tuning of the first Al/ML model online.

10. The method of any one of claims 1 to 9, further comprising:
indicating to the base station (102A, 102B, 102C, 310, 504, 804) a maximum number of Al/ML models that can be fine-tuned simultaneously.

11. A user equipment, UE, in a wireless communication system (100; 300), the UE (106A, 106B, 106C, 302, 502, 802) comprising:
a transceiver (112);
at least one processor (114); and
a memory (116) comprising instructions that when executed by the at least one processor (114) perform actions that:
transmit, to a base station (102A, 102B, 102C, 310, 504, 804), capability information comprising artificial intelligence/machine learning, Al/ML, online fine-tuning of one or more Al/ML models of the UE (106A, 106B, 106C, 302, 502, 802),
receive, from the base station (102A, 102B, 102C, 310, 504, 804), authorization to fine-tune online a first Al/ML model of the UE (106A, 106B, 106C, 302, 502, 802), and
upon receipt, from the base station (102A, 102B, 102C, 310, 504, 804), of the authorization to fine-tune online the first Al/ML model:
receive, from the base station (102A, 102B, 102C, 310, 504, 804), channels and/or signals for the UE (106A, 106B, 106C, 302, 502, 802) to determine whether the first Al/ML model needs to be fine-tuned,
determine to fine-tune the first Al/ML model online based on the channels and/or signals received from the base station (102A, 102B, 102C, 310, 504, 804) and model-generated output from the first Al/ML model, and
fine-tune the first Al/ML model online to generate an output that is used for a downlink transmission.

12. The UE of claim 11, wherein the capability information further comprises a maximum number of the one or more Al/ML models that the UE (106A, 106B, 106C, 302, 502, 802) is able to update simultaneously.

13. The UE of claim 11 or 12, wherein the capability information further comprises channels or signals needed to determine a need to fine-tune the one or more Al/ML models of the UE (106A, 106B, 106C, 302, 502, 802).

14. The UE of any one of claims 11 to 13, wherein the capability information further comprises a time duration of fine-tuning the one or more Al/ML models and/or an indication of usage of the one or more Al/ML models during fine-tuning.

15. The UE of any one of claims 11 to 14, wherein the memory (116) comprises further instructions that when executed on the at least one processor (114) perform actions that:
upon completion of the fine-tuning of the first Al/ML model online, transmit to the base station (102A, 102B, 102C, 310, 504, 804), an indication that the first Al/ML model has been fine-tuned.
